# EUROPÄISCHE PATENTSCHRIFT

(11) **EP 3 059 567 B1**
(45) Veröffentlichungstag und Bekanntmachung des Hinweises auf die Patenterteilung: **20.10.2021**
(21) Anmeldenummer: 16155917.4
(22) Anmeldetag: 16.02.2016
(51) Int. Cl.: G01L 23/10

(54) **DRUCKSENSOR MIT EINER DRUCKRAUMSEITIG ANGEBRACHTEN MEMBRAN UND VERWENDUNG EINES SOLCHEN**
PRESSURE SENSOR WITH A MEMBRANE APPLIED ON THE PRESSURE CHAMBER SIDE AND USE OF SUCH A PRESSURE SENSOR
CAPTEUR DE PRESSION COMPRENANT UNE MEMBRANE DISPOSEE COTE CHAMBRE DE PRESSION ET SON UTILISATION

(30) Priorität: 20.02.2015 CH 2242015
(43) Veröffentlichungstag der Anmeldung: 24.08.2016
(73) Patentinhaber: Kistler Holding AG, 8408 Winterthur (CH)
(72) Erfinder: BRUNNER, Simon, 8307 Effretikon (CH); GIGER, Martin, 8400 Winterthur (CH)

(56) Entgegenhaltungen:
- WO-A1-2010/040239
- WO-A1-2010/040239
- JP-A- H0 534 231
- JP-A- H0 534 231
- US-A1- 2004 231 425

## Beschreibung

### Technisches Gebiet

Die Erfindung betrifft einen Drucksensor mit einer druckraumseitig angebrachten Membran zum Messen von Drücken in Druckräumen, insbesondere in Brennräumen von Verbrennungsmotoren, sowie eine Verwendung eines solchen.

### Technischer Hintergrund

Drucksensoren zum Messen von Drücken in Druckräumen, insbesondere in Brennräumen von Verbrennungsmotoren, umfassen typischerweise ein hohlzylindrisches Sensorgehäuse, in welchem sich ein Messelement befindet. Das Sensorgehäuse ist druckraumseitig resp. brennraumseitig mit einer hitzebeständigen, flexiblen Membran dichtend abgeschlossen, welche den Brennraum vom Innenraum des Sensors trennt. Die Membran überträgt den im Brennraum herrschenden Druck direkt oder indirekt auf das Messelement.

Ein Problem, welches bei allen bekannten Drucksensoren für Brennräume oder Druckräume mit hohen und schnellen Temperaturschwankungen auftritt, ist der sogenannte Thermoschock. Thermische Dehnungen und mechanische Spannungen beim Sensor und insbesondere in der Membran, hervorgerufen durch Temperaturänderungen im Druckraum, können zu mehr oder weniger grossen Messfehlern, z.B. aufgrund einer Membranverformung, führen, welche nur schwer rechnerisch korrigierbar sind. Bekannte, bezüglich Thermoschock optimierte Membranen haben eine dünnwandige, flache Ausgestaltung und somit eine beschränkte Lebensdauer. Mit einer dickeren Ausgestaltung kann zwar die Lebensdauer der Membran erhöht werden, dies resultiert hingegen in einer höheren Steifigkeit und somit tieferen Sensorempfindlichkeit. Gleichzeitig bewirkt eine dickere Ausgestaltung bekannter Membranen ein schlechteres Thermoschockverhalten des Sensors.

In der US20040231425 sind Drucksensoren mit verschiedenen Membranformen beschrieben. Um Messfehler aufgrund von Materialausdehnung zu verringern, wird vorgeschlagen, die Membran zwischen dem Druckstempel und dem Befestigungsrand mit einem gefalteten oder wellenförmigen Segment zu versehen. Dabei sollen Auf- und Abwärtsbewegungen des Druckstempels aufgrund der thermischen Ausdehnung verringert werden, indem das Segment einen nach oben und einen nach unten gerichteten Bereich aufweist. Die Materialstärke ist bei diesen Membranen meist gleichmässig dick oder weist mittig im Bereich des Druckstempels ein Maximum auf.

Aus WO2010040239 ist eine Membran für Drucksensoren bekannt, welche einen äusseren Rand und einen inneren Druckstempel umfasst. Der äussere Rand und der innere Druckstempel sind über ein elastisches Segment verbunden. Ähnlich wie bei US20040231425 weist das elastische Segment einen nach oben und einen nach unten gerichteten Bereich auf. Zur Verringerung von Messfehlern aufgrund thermischer Ausdehnung wurde weiter vorgeschlagen, die Materialstärke des elastischen Segments derart zu variieren, dass es mittig eine dünnste Stelle aufweist, von welcher aus die Materialstärke beidseitig stetig zunimmt. Dadurch entsteht eine gelenkige Membran, welche die thermische Ausdehnung besser kompensieren kann. Nachteilig ist jedoch, dass mit einer zunehmend dünneren Membran auch deren Festigkeit und somit deren Lebensdauer abnimmt.

Die JPH0534231A zeigt einen piezoelektrischen Drucksensor, wo Drücke über einen im Sensorgehäuse beweglich gelagerten Stift auf eine innen im Sensorgehäuse angeordnete Membran übertragen werden. Von der innen angeordneten Membran werden die Drücke über einen Druckstempel auf ein piezoelektrisches Element Übertragen. Die innen angeordnete Membran ist den Drücken und sich rasch ändernden Temperaturvariationen nicht direkt ausgesetzt, wodurch Messfehler vermieden werden.

### Darstellung der Erfindung

Eine Aufgabe der Erfindung besteht darin, die Messgenauigkeit resp. das Thermoschockverhalten und die Lebensdauer eines Drucksensors bei der hohen Beanspruchung in einem Druckraum mit hohen Druck- und Temperaturschwankungen zu optimieren.

Diese Aufgabe wird durch einen Drucksensor mit den Merkmalen des Anspruchs 1 gelöst. Der Drucksensor zum Messen von Drücken in Druckräumen, insbesondere in Brennräumen von Verbrennungsmotoren, umfasst ein Sensorgehäuse mit einer Längsachse und einem Innenraum, ein Messelement, welches im Innenraum des Sensorgehäuses angeordnet ist, und eine rotationssymmetrisch ausgebildete Membran. Die Membran weist einen peripheren Randabschnitt auf, mittels dessen sie mit einem druckraumseitigen Ende des Sensorgehäuses verbunden, insbesondere schweissverbunden, ist und den Innenraum des Sensorgehäuses druckraumseitig dichtend abschliesst. Die Membran weist weiter einen zentralen, mit dem Messelement wirkverbundenen Druckstempel und ein flexibles, ringförmiges Membransegment auf. Das ringförmige Membransegment verbindet den Druckstempel mit dem peripheren Randabschnitt der Membran. Das ringförmige Membransegment ist im Querschnitt als druckraumseitig konvexer Kreisbogen mit konstanter Materialstärke ausgestaltet. Die konvexe kreisbogenförmige Membran kann einem äusseren Druck viel besser standhalten als eine Membran in anderer Geometrie, da der Druck die Festigkeit der Bogenkonstruktion unterstützt. Wäre der Bogen allerdings konkav, so bliebe dieser Vorteil aus. Vorzugsweise ist druckraumseitig ein radial innerer Endpunkt des gleichmässig dicken Kreisbogens gegenüber einem radial äusseren Endpunkt des Kreisbogens entlang der Längsachse in Richtung des Innenraums zurückversetzt angeordnet. Dadurch ist eine Verlängerung des Kreisbogens möglich, ohne dass die vorderste Front des Kreisbogens, in Axialrichtung A betrachtet, weiter hervorsteht als der Randbereich der Membran. In Wirklichkeit liegen, bedingt durch die Rotationssymmetrie, die Endpunkte jeweils auf kreisförmigen Linien.

Eine Membran mit einem flexiblen als gleichmässig dicken Kreisbogen ausgestalteten Membransegment erlaubt eine bessere Kräfteverteilung als Membranen mit geraden Abschnitten. Die gleichmässige Kräfteverteilung im Kreisbogen reduziert Spannungen innerhalb der Membran, was sich wiederum positiv auf die Festigkeit der Membran und somit die Lebensdauer auswirkt. Indem der radial innere Endpunkt des Kreisbogens resp. die druckraumseitige Oberfläche des Druckstempels zurückversetzt ist, kann der Kreisbogen über einen grösseren Winkel (Mittelpunktswinkel) ausgestaltet werden, was den Effekt des Kreisbogens weiter verstärkt. Das Zurückversetzen bringt zudem den Vorteil, dass bei einem gegebenen Kreisbogenwinkel (Mittelpunktswinkel) von beispielsweise 90 Grad und einem gegebenen Radius des Kreisbogens ein geringerer Aussenradius der Membran möglich ist, als wenn der innere Endpunkt auf gleicher Höhe wie der äussere Endpunkt liegen würde. Simulationen haben gezeigt, dass mit einem Zurückversetzen des inneren Endpunkts auch das Thermoschockverhalten verbessert werden kann resp. ein daraus resultierender Messfehler des Messelements, vorzugsweise ein piezoelektrisches oder piezoresistives Messelement, reduziert wird.

Der periphere Randabschnitt der Membran kann vorzugsweise druckraumseitig in Richtung der Längsachse über einen Scheitelpunkt des Kreisbogens hervorstehen. Mit dem Scheitelpunkt ist der Punkt des Kreisbogens gemeint, welcher in Längsrichtung gesehen am weitesten in den Druckraum hineinragt. Im Extremfall kann dieser mit dem äusseren Endpunkt zusammenfallen, wobei er aber in der Regel zwischen den beiden Endpunkten aber näher am äusseren Endpunkt liegt. Indem der Scheitelpunkt des Kreisbogens in Längsrichtung gegenüber der druckraumseitigen Oberfläche des peripheren Randabschnitts relativ zum Druckraum zurückversetzt ist, ist ein umlaufender gegenüber dem Rest der Membran erhöhter Rand ausgebildet. Der Kreisbogen steht dabei im eingebauten Zustand des Drucksensors nicht über die innere Wandung des Druckraums vor und ist somit gegenüber den harschen Bedingungen, insbesondere in einem Brennraum, besser geschützt. Die Oberfläche des peripheren Randabschnitts kann im rechten Winkel zur Längsachse eben ausgestaltet sein. Weiter haben Simulationen gezeigt, dass mit einem gegenüber dem Kreisbogen erhöhten peripheren Rand das Thermoschockverhalten der Membran optimiert werden kann.

Die Oberfläche des peripheren Randabschnitts kann auch auf der Höhe des Scheitelpunkts oder gegenüber dem Scheitelpunkt entlang der Längsachse in Richtung Innenraum versetzt angeordnet sein. In diesen Fällen weist der Drucksensor bevorzugt einen Dichtkonus oder eine Schutzhülse auf, welche das Sensorgehäuse gegenüber der Brennraumwandung abdichtet und den Scheitelpunkt des Kreisbogens in Richtung der Längsachse des Drucksensors druckraumseitig überragt, so dass die Membran im eingebauten Zustand gegenüber der Wandung des Druckraums zurückversetzt angeordnet ist. Der Dichtkonus oder die Schutzhülse bildet dann einen umlaufenden gegenüber dem Rest des Drucksensors erhöhten Rand.

Druckraumseitig kann beim Übergang des ringförmigen Membransegments zum peripheren Randabschnitt eine umlaufende Vertiefung, beispielsweise eine u-förmige, muldenförmige oder eine v-förmige Vertiefung ausgebildet sein, welche eine weitere Verlängerung des Kreisbogens, d.h. einen grösseren Kreisbogenwinkel erlaubt. Bevorzugt ist die Vertiefung derart ausgestaltet, dass zwischen dem Kreisbogen und der Vertiefung ein gleichmässiger Übergang ohne scharfe Kanten vorhanden ist. Zur druckraumseitigen Oberfläche des peripheren Randabschnitts hin kann die Vertiefung an deren radial äusseren Rand einen stumpfen Winkel von 90 bis 160 Grad, vorzugsweise 120 bis 130 Grad, ausbilden. Dieser Übergang kann als scharfe, abgerundete oder gebrochene Kante ausgestaltet sein.

Der Kreisbogen kann einen Winkel (Mittelpunktswinkel) von 30 bis 120 Grad, vorzugsweise 55 bis 90 Grad, einschliessen. Solche Membranen weisen gegenüber herkömmlichen Membranen bei vergleichbaren Messbedingungen eine höhere Festigkeit auf.

Der Druckstempel kann innenraumseitig in der inneren Verlängerung des Kreisbogens einen Hinterschnitt aufweisen, was zu einer Vergrösserung der innenraumseitig auf das Messelement wirkende Oberfläche des Druckstempels führt.

Der Druckstempel und/oder der periphere Randabschnitt sind in Richtung der Längsachse der Membran dicker ausgestaltet als die Materialstärke der Kreisbogen, so dass das ringförmige Membransegment das dünnste und somit flexible Segment der Membran bildet.

Mögliche Dimensionen und Masse der Membran können wie folgt angegeben werden und können für sich oder in beliebiger Kombination mit den vorgenannten Merkmalen verwirklicht sein:
- Der Kreisbogen mit konstanter Materialstärke schliesst einen Winkel von 30 bis 120 Grad, vorzugsweise 55 bis 90 Grad, ein.
- Die Vertiefung bildet an deren radial äusseren Rand zu einer druckraumseitigen Oberfläche des peripheren Randabschnitts einen stumpfen Winkel von 90 bis 160 Grad, vorzugsweise 120 bis 130 Grad, aus.
- Innenraumseitig schliesst die Tangente am äusseren Endpunkt einer Verlängerung des Kreisbogens mit der Längsachse des Sensorgehäuses einen Öffnungswinkel von 10 bis 80 Grad, bevorzugt 30 bis 40 Grad, ein.
- Das Verhältnis äusserer Kreisbogenradius zu Aussenradius der Membran entspricht etwa 0.1 bis 0.4, vorzugsweise etwa 0.25.

Die Membran kann zum Beispiel aus Stahl, Eisenbasis-, Nickelbasis-, Kobaltbasis- oder Titanbasislegierungen gefertigt sein, die eine hohe Festigkeit und Temperaturbeständigkeit aufweisen.

Die Erfindung betrifft weiter die Verwendung eines Drucksensors mit den vorangehend beschriebenen Merkmalen zur Messung des Drucks in einem Brennraum eines Verbrennungsmotors. Der Drucksensor kann auch für interne ballistische Anwendungen verwendet werden, z.B. in Druckräumen, in welchen ebenfalls schnelle und hohe Druck- und Temperaturänderungen auftreten.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Schnittdarstellung einer ersten erfindungsgemässen Ausführungsform der Membran eines Drucksensors;
- Fig. 2: eine Schnittdarstellung einer zweiten Ausführungsform der Membran eines Drucksensors; und
- Fig. 3: eine Schnittdarstellung einer dritten Ausführungsform der Membran eines Drucksensors.

### Wege zur Ausführung der Erfindung

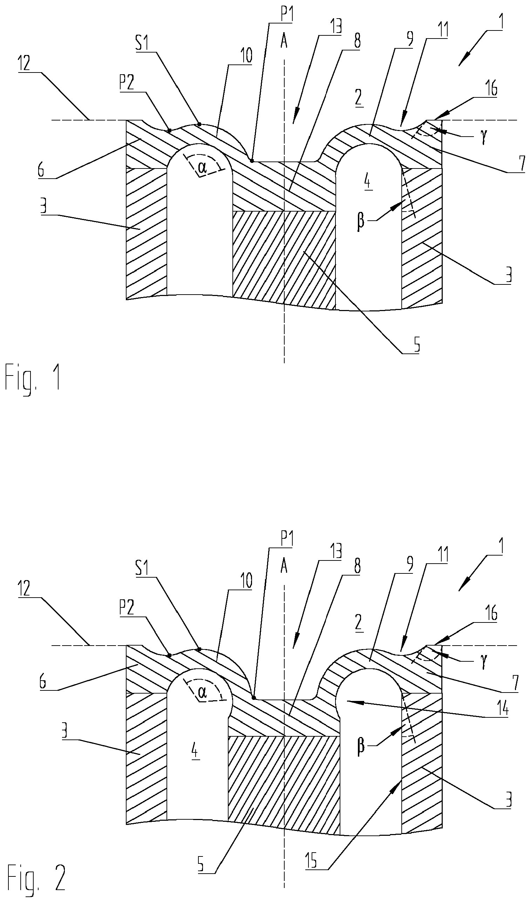

In den Figuren 1 und 2 sind Schnittdarstellungen von Ausführungsformen einer Membran 6 eines Drucksensors 1 zum Messen von Drücken in Druckräumen, insbesondere Brennräumen von Verbrennungsmotoren, gezeigt. Der Drucksensor 1 weist ein hohlzylindrisches Sensorgehäuse 3 mit einem Innenraum 4 und ein im Innenraum 4 angeordnetes Messelement 5, vorzugsweise ein piezoelektrisches oder piezoresistives Messelement, auf. Sensorgehäuse 3 und Messelement 5 sind nur teilweise dargestellt. Die übrigen Elemente des Drucksensors, wie beispielsweise die elektrischen Anschlüsse oder die Abstützung des Messelements am Sensorgehäuse sind nicht dargestellt. Der Drucksensor 1 wird beispielsweise in eine geeignete Öffnung im Motorenblock dichtend eingeschraubt oder sonst wie befestigt. Die innere Wandung 12 des Druckraums 2 ist in den Figuren im Bereich der Membran 6 strichliniert angedeutet.

Die rotationssymetrische Membran 6 weist einen peripheren Randabschnitt 7, einen zentralen Druckstempel 8 und ein flexibles, ringförmiges Membransegment 9 auf. Sie ist mit dem peripheren Randabschnitt 7 fest mit einem oberen Rand des hohlzylindrischen Sensorgehäuses 3 verschweisst und dichtet den Innenraum 4 des Sensorgehäuses 3 gegenüber dem Druckraum 2 ab. In den gezeigten Ausführungsformen sind Membran und Sensorgehäuse auf Stoss verbunden. Andere Verbindungen z.B. mit einem umlaufenden Falz sind auch möglich. Das flexible, ringförmige Membransegment 9 verbindet den peripheren Randabschnitt 7 mit dem zentralen Druckstempel 8. Der zentrale Druckstempel 8 ist mit dem Messelement 5 wirkverbunden, so dass Auslenkungen des Druckstempels 8 entlang der Längsachse A des Druckssensors 1, die aufgrund des Innendrucks im Druckraum 2 entstehen, vom Messelement 5 erfasst werden.

Das ringförmige Membransegment 9 ist im Querschnitt als druckraumseitig konvexer Kreisbogen 10 ausgebildet mit einem in Axialrichtung höchsten Scheitelpunkt S1. Der Kreisbogen 10 weist eine konstante Materialstärke auf und ist dünner ausgebildet als der periphere Randabschnitt 7 oder der zentrale Druckstempel 8. Vom Kreisbogen 10 begrenzt ist über dem Druckstempel 8 eine zentrale Wanne 13 ausgebildet, die einen im Wesentlichen flachen Boden aufweist. Dort wo der Kreisbogen 10 am Boden der zentralen Wanne 13 ansetzt, weist er druckraumseitig einen radial inneren Endpunkt P1 auf. An der Verbindungsstelle mit dem peripheren Randabschnitt 7 weist er einen radial äusseren Endpunkt P2 auf, wobei der innere Endpunkt P1 gegenüber dem äusseren Endpunkt P2 entlang der Längsachse A in Richtung des Innenraums 4 zurückversetzt angeordnet ist. Zudem ist der Scheitelpunkt S1 des Kreisbogens 10 bevorzugt tiefer als die druckraumseitige Oberfläche 16 des peripheren Randabschnitts 7 angeordnet. Die druckraumseitige Oberfläche 16 des peripheren Randabschnitts 7 steht bevorzugt über den Kreisbogen 10 vor, so dass diese Oberfläche im eingebauten Zustand des Drucksensors 1 im Wesentlichen mit der Wandung 12 des Druckraums 2 fluchtet und der Kreisbogen 10 dabei nicht in den Druckraum 2 hineinragt. Der periphere Randabschnitt 7 bildet einen umlaufenden Rand, der in diesem Fall gegenüber dem Rest der Membran 6 erhöht ist.

Aus den Figuren 1 und 2 ist ersichtlich, dass bei gleichbleibendem Radius des Kreisbogens der vom Kreisbogen 10 eingeschlossene Winkel α (Mittelpunktswinkel alpha) vergrössert werden kann, indem der innere Endpunkt P1 resp. der Boden der Wanne 13 weiter nach unten versetzt wird. In Fig. 1 beträgt der Kreisbogenwinkel etwa 105 Grad und in Fig. 2 etwa 120 Grad. Der Winkel α des Kreisbogens 10 kann zudem durch die Ausgestaltung resp. Tiefe einer umlaufenden Vertiefung 11, welche druckraumseitig an der radial nach innen gerichteten Seite des peripheren Randabschnitts 7 ausgebildet ist, vergrössert werden. In der Regel entspricht der tiefste Punkt der Vertiefung 11 im Wesentlichen dem äusseren Endpunkt P2 des Kreisbogens 10.

In den gezeigten Ausführungsformen bildet die Vertiefung 11 an deren radial äusseren Rand zur druckraumseitigen Oberfläche 16 des peripheren Randabschnitts 7 einen stumpfen Winkel γ von vorzugsweise etwa 135 Grad aus. Beim Übergang ist eine scharfe Kante ausgebildet. Innenraumseitig schliesst die Tangente am Endpunkt der Verlängerung des Kreisbogens 10 resp. am Übergang des ringförmigen Membransegments 9 zum peripheren Randabschnitt 7 mit der Längsachse A des zylindrischen Sensorgehäuses resp. mit der Innenwand 15 des zylindrischen Sensorgehäuses 3, welche in der gezeigten Ausführungform parallel zur Längsachse A verläuft, einen Öffnungswinkel β von etwa 30 Grad.

Bei der erfindungsgemässen Ausführungsform nach Fig. 2 weist der Druckstempel 8 innenraumseitig in der inneren Verlängerung des Kreisbogens 10 einen Hinterschnitt 14 auf, was eine Vergrösserung der innenraumseitigen auf das Messelement 5 wirkende Oberfläche des Druckstempels 8 bewirkt.

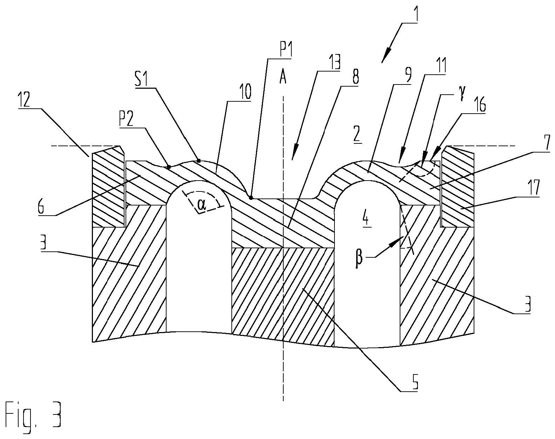

Die Membran 6 in der Ausführungsform in Fig. 3 zeigt im Unterschied zu den Ausführungsformen in Fig. 1 und 2 eine Oberfläche 16 des Randabschnitts 7, welche in etwa auf der Höhe des Scheitelpunkts S1 liegt. Diese Oberfläche 16 kann auch entlang der Längsachse A weiter in Richtung Innenraum 4 versetzt und in der Höhe zwischen dem Scheitelpunkt S1 und dem äusseren Endpunkt P2 angeordnet sein. In solchen Ausführungsformen weist der Drucksensor 1 einen Dichtkonus oder eine Schutzhülse 17 auf, welche den Scheitelpunkt S1 in Richtung der Längsachse A druckraumseitig überragt, so dass die Membran gegenüber der Wandung 12 des Druckraums 2 zurückversetzt angeordnet ist.

### Bezeichnungsliste

- 1: Drucksensor
- 2: Druckraum
- 3: Sensorgehäuse
- 4: Innenraum
- 5: Messelement
- 6: Membran
- 7: peripherer Randabschnitt
- 8: Druckstempel
- 9: ringförmiges Membransegment
- 10: Kreisbogen
- 11: Vertiefung
- 12: Wandung des Druckraums
- 13: zentrale Wanne
- 14: Hinterschnitt
- 15: Innenwand
- 16: Oberfläche des Randabschnitts
- 17: Dichtkonus / Schutzhülse
- A: Längsachse
- P1: radial innerer Endpunkt des Kreisbogens
- P2: radial äusserer Endpunkt des Kreisbogens
- S1: Scheitelpunkt des Kreisbogens

## Patentansprüche

1. Drucksensor (1) zum Messen von Drücken in Druckräumen (2), insbesondere Brennräumen von Verbrennungsmotoren, umfassend ein Sensorgehäuse (3) mit einer Längsachse (A) und einem Innenraum (4), ein Messelement (5), welches im Innenraum (4) des Sensorgehäuses (3) angeordnet ist, und eine rotationssymmetrisch ausgebildete Membran (6), welche einen peripheren Randabschnitt (7) aufweist, mittels dessen die Membran (6) mit einem druckraumseitigen Ende des Sensorgehäuses (3) verbunden ist und den Innenraum des Sensorgehäuses (3) druckraumseitig dichtend abschliesst,
wobei die Membran (6) weiter einen zentralen, mit dem Messelement (5) wirkverbundenen Druckstempel (8) und ein flexibles, ringförmiges Membransegment (9) aufweist, welches den Druckstempel (8) mit dem peripheren Randabschnitt (7) verbindet, wobei das ringförmige Membransegment (9) im Querschnitt betrachtet als druckraumseitig konvexer Kreisbogen (10) mit konstanter Materialstärke ausgestaltet ist,
**dadurch gekennzeichnet, dass** druckraumseitig ein radial innerer Endpunkt (P1) des Kreisbogens (10) gegenüber einem radial äusseren Endpunkt (P2) des Kreisbogens (10) entlang der Längsachse (A) in Richtung des Innenraums (4) zurückversetzt angeordnet ist.

2. Drucksensor nach Anspruch 1, **dadurch gekennzeichnet, dass** der periphere Randabschnitt (7) druckraumseitig in Richtung der Längsachse (A) über einen Scheitelpunkt (S1) des Kreisbogens (10) hervorsteht.

3. Drucksensor nach einem der vorangehenden Ansprüche, **dadurch gekennzeichnet, dass** druckraumseitig beim Übergang des ringförmigen Membransegments (9) zum peripheren Randabschnitt (7) eine umlaufende Vertiefung (11) ausgebildet ist.

4. Drucksensor nach einem der vorangehenden Ansprüche, **dadurch gekennzeichnet, dass** der Kreisbogen einen Winkel (α) von 30 bis 120 Grad, vorzugsweise 55 bis 90 Grad einschliesst.

5. Drucksensor nach Anspruch 3, **dadurch gekennzeichnet, dass** die Vertiefung (11) an deren radial äusseren Rand zu einer druckraumseitigen Oberfläche (16) des peripheren Randabschnitts (7) einen stumpfen Winkel (γ) von 90 bis 160 Grad, vorzugsweise 120 bis 130 Grad, ausbildet.

6. Drucksensor nach einem der vorangehenden Ansprüche, **dadurch gekennzeichnet, dass** innenraumseitig die Tangente am äusseren Endpunkt der Verlängerung des Kreisbogens (10) mit der Längsachse (A) des Sensorgehäuses einen Öffnungswinkel (β) von 10 bis 80 Grad, bevorzugt 30 bis 40 Grad, einschliesst.

7. Drucksensor nach einem der vorangehenden Ansprüche, **dadurch gekennzeichnet, dass** der Druckstempel (8) innenraumseitig in der inneren Verlängerung des Kreisbogens (10) einen Hinterschnitt (14) aufweist.

8. Drucksensor nach einem der vorangehenden Ansprüche, **dadurch gekennzeichnet, dass** der Druckstempel (8) und/oder der periphere Randabschnitt (7) in Richtung der Längsachse (A) der Membran (6) dicker als die Materialstärke der Kreisbogen (10) ausgestaltet sind.

9. Drucksensor nach einem der vorangehenden Ansprüche, **dadurch gekennzeichnet, dass** druckraumseitig mittig über dem Druckstempel (8) eine durch das ringförmige Membransegment (9) begrenzte, zentrale Wanne (13) mit einem im Wesentlichen flachen oder runden Boden ausgebildet ist.

10. Verwendung eines Drucksensors nach einem der vorangehenden Ansprüche in einem Brennraum eines Verbrennungsmotors oder für interne ballistische Anwendungen.

## Claims

1. A pressure sensor (1) for measuring pressures in pressure chambers (2), more particularly in combustion chambers of internal combustion engines, comprising a sensor housing (3) with a longitudinal axis (A) and an interior space (4), a measuring element (5) which is arranged in the interior space (4) of the sensor housing (3), and a rotation-symmetrically designed membrane (6) which has a peripheral edge section (7), by means of which the membrane (6) is connected with an end of the sensor housing (3) at the pressure chamber side and seals the interior space of the sensor housing (3) off on the pressure chamber side,
wherein the membrane (6) also comprises a central plunger (8) interacting with the measuring element (5), and a flexible, annular membrane segment (9) which connects the plunger (8) to the peripheral edge section (7),
**characterised in that**
on the pressure chamber side, a radial inner end point (P1) of the circular arc (10) is arranged set back, compared to a radial outer end point (P2) of the circular arc (10), along the longitudinal axis (A) in the direction of the inner space (4),
that the annular membrane segment (9) seen in cross-section is designed as a convex circular arc (10) of constant material thickness on the pressure chamber side.

2. The pressure sensor according to claim 1, **characterised in that** the peripheral edge section (7) projects on the pressure chamber side in the direction of the longitudinal axis (A) via a vertex (S1) of the circular arc (10).

3. The pressure sensor according to any one of the preceding claims, **characterised in that** on the pressure chamber side a circumferential recess (11) is formed at the transition of the annular membrane segment (9) to the peripheral edge section (7).

4. The pressure sensor according to any one of the preceding claims, **characterised in that** the circular arc encloses an angle (α) of 30 to 120 degrees, preferably 55 to 90 degrees.

5. The pressure sensor according to claim 3, **characterised in that** at its radial outer edge the recess (11) forms an obtuse angle (γ) of 90 to 160 degrees, preferably 120 to 130 degrees to the pressure chamber side surface (16) of the peripheral edge section (7).

6. The pressure sensor according to any one of the preceding claims, **characterised in that** in the interior space the tangent at the outer end point of the prolongation of the circular arc (10) forms an opening angle (β) of 10 to 80 degrees, preferably 30 to 40 degrees with the longitudinal axis (A) of the sensor housing.

7. The pressure sensor according to any one of the preceding claims, **characterised in that** in the interior space in the inner prolongation of the circular arc (10) the plunger (8) has an undercut (14) .

8. The pressure sensor according to any one of the preceding claims, **characterised in that** in the direction of the longitudinal axis (A) of the membrane (6) the plunger (8) and/or the peripheral edge section (7) is thicker than the material thickness of the circular arc (10).

9. The pressure sensor according to any one of the preceding claims, **characterised in that** on the pressure chamber side centrally above the plunger (8), a central trough (13) delimited by the annular membrane segment (9) is formed with an essentially flat or rounded base.

10. Use of a pressure sensor according to any one of the preceding claims in a combustion chamber of an internal combustion engine or for internal ballistic applications.

## Revendications

1. Capteur de pression (1) pour mesurer des pressions dans des chambres de pression (2) et en particulier dans des chambres de combustion de moteurs à combustion interne, ledit capteur de pression (1) comprenant un boîtier de capteur (3) ayant un axe longitudinal (A) et un espace intérieur (4), un élément de mesure (5) disposé dans l'espace intérieur (4) du boîtier de capteur (3) et une membrane (6) formée à symétrie de révolution et comprenant une partie de bord (7) périphérique qui relie ladite membrane (6) du côté de la chambre de pression à une extrémité du boîtier de capteur (3) et qui ferme de manière étanche du côté de la chambre de pression l'espace intérieur du boîtier de capteur (3),
dans lequel ladite membrane (6) comprend en outre un piston de pression (8) central qui est relié fonctionnellement à l'élément de mesure (5), et un segment de membrane (9) flexible, de forme annulaire, qui relie ledit piston de pression (8) à la partie de bord (7) périphérique, ou ledit segment de membrane (9) annulaire est configuré, vu en coupe transversale, comme un arc de cercle (10) qui est convexe du côté de la chambre de pression et réalisé à épaisseur du matériau constante,
**caractérisé en ce qu'**un point d'extrémité (P1) de l'arc de cercle (10) situé radialement intérieur est agencé, du côté de la chambre de pression, de manière décalée en arrière le long de l'axe longitudinal (A) en direction de l'espace intérieur (4) par rapport à un point d'extrémité (P2) de l'arc de cercle (10) situé radialement extérieur.

2. Capteur de pression selon la revendication 1, **caractérisé en ce que** la partie de bord (7) périphérique fait saillie du côté de la chambre de pression au-delà d'un sommet (S1) de l'arc de cercle (10) dans la direction de l'axe longitudinal (A).

3. Capteur de pression selon l'une quelconque des revendications précédentes, **caractérisé en ce qu'**un renfoncement (11) périphérique est formé du côté de la chambre de pression à la transition du segment de membrane (9) annulaire vers la partie de bord (7) périphérique.

4. Capteur de pression selon l'une quelconque des revendications précédentes, **caractérisé en ce que** l'arc de cercle délimite un angle (α) de 30 à 120 degrés, de préférence de 55 à 90 degrés.

5. Capteur de pression selon la revendication 3, **caractérisé en ce que** ledit renfoncement (11) forme, au niveau du bord radialement extérieur de celui-ci, un angle obtus (y) de 90 à 160 degrés, de préférence de 120 à 130 degrés, avec une surface (16) du côté de la chambre de pression de la partie de bord (7) périphérique.

6. Capteur de pression selon l'une quelconque des revendications précédentes, **caractérisé en ce que** la tangente au point d'extrémité extérieur du prolongement de l'arc de cercle (10) enferme, du côté de l'espace intérieur, un angle d'ouverture (13) de 10 à 80 degrés, de préférence de 30 à 40 degrés, avec l'axe longitudinal (A) du boîtier du capteur.

7. Capteur de pression selon l'une quelconque des revendications précédentes, **caractérisé en ce que** le piston de pression (8) comprend, du côté de l'espace intérieur, une contre-dépouille (14) dans le prolongement intérieur de l'arc de cercle (10).

8. Capteur de pression selon l'une quelconque des revendications précédentes, **caractérisé en ce que** le piston de pression (8) et/ou la partie de bord (7) périphérique sont d'une épaisseur plus grande que l'épaisseur de matériau de l'arc de cercle (10) dans la direction de l'axe longitudinal (A) de la membrane (6).

9. Capteur de pression selon l'une quelconque des revendications précédentes, **caractérisé en ce qu'**une cuve centrale (13) délimitée par le segment de membrane (9) annulaire avec un fond sensiblement plat ou rond est formée du côté de la chambre de pression centralement au-dessus du piston de pression (8).

10. Utilisation d'un capteur de pression selon l'une quelconque des revendications précédentes dans une chambre de combustion d'un moteur à combustion interne ou pour des applications de balistique interne.
